# EUROPEAN PATENT APPLICATION

(11) **EP 2 806 004 A1**
(43) Date of publication of application: **26.11.2014**
(21) Application number: 13738440.0
(22) Date of filing: 17.01.2013
(51) Int. Cl.: C09J 7/02, A61J 1/10, A61M 1/02, C09J 175/06, G09F 3/10

(54) **ADHESIVE SHEET, BLOOD BAG WITH ADHESIVE SHEET, AND METHOD FOR PRODUCING SAME**

(30) Priority: 19.01.2012 JP 2012008980
(71) Applicant: LINTEC Corporation, Tokyo 173-0001 (JP)
(72) Inventor: YAMAGISHI, Masanori, Tokyo 173-0001 (JP)
(74) Representative: Raynor, Stuart Andrew
(86) International application number: PCT/JP2013/050825
(87) International publication number: WO 2013/108845

(57) **Abstract**

An adhesive sheet comprising a sheet-like base material and a heat-sensitive adhesive layer is provided as an adhesive sheet which can be appropriately adhered to a plasticized vinyl chloride resin article as an adherend even if the heat-sealing is performed at a low temperature and in which the lifting or delamination of the adhesive sheet and the flowing out of the adhesive from an end portion of the adhesive sheet are suppressed even if an autoclave treatment is performed for the above article to which the sheet is adhered. The heat-sensitive adhesive layer is formed using a heat-sensitive adhesive composition that contains a polyester-based resin and a crosslinking agent, and the heat-sensitive adhesive layer includes a cross-linked structure that is based on these components. The polyester-based resin contains an amorphous polyester resin having a glass transition temperature of -30°C or higher and 7°C or lower in an amount of 80 mass% or more relative to the whole polyester-based resin.

## Description

### [Technical Field]

The present invention relates to an adhesive sheet to be adhered to a plasticized vinyl chloride resin article, and particularly to an adhesive sheet which has good adhesion ability and can be adhered to a plasticized vinyl chloride resin blood bag, etc. The present invention also relates to a blood bag with an adhesive sheet to which such an adhesive sheet is adhered, and a method for producing the blood bag.

### [Background Art]

As a blood bag to be used for blood transfusion or the like, a bag formed of a plasticized vinyl chloride resin is largely used. A sheet-like member may be adhered to this bag. The sheet-like member is represented by a label on which information regarding blood such as blood type is printed. Hereinafter, such a sheet-like member to be adhered to a blood bag or the like and a sheet-like or tape-like member to provide that sheet-like member are referred collectively to as an "adhesive sheet".

It is required to ensure that a blood bag is sterile. To this end, a sterilization treatment is usually performed for a blood bag such that the bag is sterilized by steam in an autoclave in a state where an adhesive sheet is adhered to the bag (in the present description, such sterilization treatments are referred collectively to as an "autoclave treatment").

In general, an adhesive sheet as described above comprises a base material and an adhesive layer. With consideration that an autoclave treatment is performed for the adhesive sheet, the adhesive sheet is required to have functionalities as follows:
(1) An adhesive of the adhesive layer does not flow out from an end portion of the adhesive sheet.
(2) Deterioration of the base material of the adhesive sheet is not significant.
(3) Under an effect of a plasticizer, for example, used for vinyl chloride that constitutes the blood bag, the pressure-sensitive adhesion ability of a pressure-sensitive adhesive layer to the vinyl chloride does not deteriorate so that the adhesive sheet is not lifted or does not delaminate.

As an adhesive sheet having such functionalities, there is proposed an adhesive sheet which comprises a film base material and a polyester-based resin and which can strongly adhere to a plasticized vinyl chloride resin (e.g., Patent Literature 1 and 2).

### [Prior Art Literature]

### [Patent Literature]

[Patent Literature 1] JP2004-231915A
[Patent Literature 2] WO2006/101219

### [Summary of the Invention]

### [Problems to be solved by the Invention]

A step in which an adhesive sheet as proposed in Patent Literature 1 or 2 is adhered to a blood bag is usually performed using a heat-sealing machine. In this step, the time for heat-sealing may be about several seconds in view of improving the productivity. In addition, the actual temperature of a sealing member in the heat-sealing machine at the time of processing (also referred to as a "heat-sealing temperature", hereinafter) may be different from a set temperature in the machine. This tendency is remarkable during winter season because the ambient temperature drops. Specifically, even when the set temperature in the heat-sealing machine is 130°C, the heat-sealing temperature for the adhesive layer may not reach 100°C. If the heat-sealing process is performed at such a low temperature, there may occur an adhesion failure of the adhesive layer of the adhesive sheet to a plasticized vinyl chloride resin article as an adherend, and the risk of occurrence of lifting or delamination of the adhesive sheet increases.

To avoid such a problem, the set temperature in the heat-sealing machine may be simply raised, and/or the time for heat-sealing may be simply set longer. In this case, however, the viscosity of the adhesive in the adhesive layer will unduly decrease during the heat-sealing process, so that the adhesive may possibly flow out.

The present invention has been created in view of such circumstances, and an object of the present invention is to provide an adhesive sheet which is used for a plasticized vinyl chloride resin article as an adherend and in which, when heat-sealing is performed such that this sheet is adhered to the adherend, adhesion to the adherend is appropriately performed even if the heating temperature in the heat-sealing is low (specifically about 100°C or lower), and occurrence of the lifting or delamination of the adhesive sheet and the flowing out of the adhesive from an end portion of the adhesive sheet are suppressed even if an autoclave treatment is performed for the above article to which the adhesive sheet is adhered. Another object of the present invention is to provide a blood bag with an adhesive sheet configured such that the adhesive sheet according to the present invention is adhered to the blood bag and a method for producing the blood bag with the adhesive sheet.

### [Means for solving the Problems]

As a result of the inventors' studies to achieve the above objects, there has been obtained a knowledge that an adhesive sheet having a specific configuration can solve the above problems. The specific configuration is such that a heat-sensitive adhesive layer is laminated on a base material and the heat-sensitive adhesive layer is formed using a heat-sensitive adhesive composition that contains an amorphous polyester-based resin and a cross-linking agent. The amorphous polyester resin has a glass transition temperature of -30°C or higher and 7°C or lower.

The present invention, which has been completed on the basis of the above knowledge, first, provides an adhesive sheet to be used for adhesion to a plasticized vinyl chloride resin article, the adhesive sheet comprising a base material and a heat-sensitive adhesive layer laminated on one surface of the base material, the base material having a sheet-like shape, wherein: the heat-sensitive adhesive layer is formed using a heat-sensitive adhesive composition; the heat-sensitive adhesive composition contains a polyester-based resin and a cross-linking agent; the polyester-based resin contains an amorphous polyester resin having a glass transition temperature of -30°C or higher and 7°C or lower in an amount of 80 mass% or more relative to the whole polyester-based resin; and the heat-sensitive adhesive layer includes a cross-linked structure formed by reaction of the polyester-based resin and the cross-linking agent (Invention 1).

The heat-sensitive adhesive layer has the polyester-based resin having the above property, and includes the cross-linking structure formed by reaction of the polyester-based resin and the cross-linking agent. This allows appropriate adhesion between the adherend and the adhesive sheet even if the process temperature in the heat-sealing process is low. In addition, troubles may not occur, such as flowing out of the adhesive from the heat-sensitive adhesive layer in the adhesive sheet, even when an autoclave treatment is performed.

In the above invention (Invention 1), it may be preferred that the cross-linking agent is an isocyanate-based cross-linking agent (Invention 2). The isocyanate-based cross-linking agent is likely to react with the polyester-based resin to be cross-linked, and the properties of the adhesive sheet can easily be improved on the basis of the cross-linked structure.

In the above invention (Invention 1, 2), the polyester-based resin may consist only of the amorphous polyester resin having a glass transition temperature of -30°C or higher and 7°C or lower (Invention 3). The term "consist only of the amorphous polyester resin" as used herein means that the content of crystalline polyester is small to such an extent that the effect based on the crystalline polyester being contained can substantially be ignored, and the concept thereof includes a case in which a small amount of crystalline polyester is contained. When the polyester-based resin consists only of the amorphous polyester resin, delamination is unlikely to occur between the adhesive layer and the base material even if the heat-sealing process is performed at a low temperature.

In the above invention (Invention 1-3), the adhesive sheet may be such that a heat-sealing process is performed for the adhesive sheet in a state in which the adhesive sheet is in contact with an adherend surface of the plasticized vinyl chloride resin article, the adherend surface being a surface to which the adhesive sheet is to be adhered, and an autoclave treatment is performed for the plasticized vinyl chloride resin article to which the adhesive sheet is adhered through the heat-sealing process (Invention 4). Even when such process and treatment are performed, troubles may not occur, such as delamination of the adhesive sheet from the adherend and flowing out of the adhesive from the heat-sensitive adhesive layer in the adhesive sheet.

In the above invention (Invention 1-4), the plasticized vinyl chloride resin article may be a plasticized vinyl chloride resin blood bag (Invention 5). In such a blood bag, the adhesive sheet according to the present invention adhered to the blood bag may be used as a label. In this case, there can be obtained a blood bag which can reduce a possibility that serious problems occur, such as medical accidents due to removal of the label, because the label comprising the adhesive sheet according to the present invention is unlikely to delaminate.

Second, the present invention provides a production method for a blood bag with an adhesive sheet, comprising: contacting the adhesive sheet according to the above invention (Invention 1-5) with an adherend surface of a plasticized vinyl chloride resin blood bag, the adherend surface being a surface to which the adhesive sheet is to be adhered; performing a heat-sealing process for the adhesive sheet in a state in which the adhesive sheet is in contact with the blood bag; and performing an autoclave treatment for the blood bag to which the adhesive sheet is adhered through the heat-sealing process to sterilize the blood bag (Invention 6).

Even when such process and treatment are performed, troubles may not occur, such as delamination of the adhesive sheet from the adherend and flowing out of the adhesive from the heat-sensitive adhesive layer in the adhesive sheet. Therefore, there can be obtained a blood bag with an adhesive sheet which offers good handling ability and reduces a possibility of medical accidents.

Third, the present invention provides a blood bag with an adhesive sheet obtained through a production method, the production method comprising: contacting the adhesive sheet according to the above invention (Invention 1-5) with an adherend surface of a plasticized vinyl chloride resin blood bag, the adherend surface being a surface to which an adhesive sheet is to be adhered; performing a heat-sealing process for the adhesive sheet in a state in which the adhesive sheet is in contact with the blood bag; and performing an autoclave treatment for the blood bag to which the adhesive sheet is adhered through the heat-sealing process to sterilize the blood bag (Invention 7).

According to the blood bag with the adhesive sheet, even when such process and treatment are performed, troubles may not occur, such as delamination of the adhesive sheet from the adherend and flowing out of the adhesive from the heat-sensitive adhesive layer in the adhesive sheet. Therefore, the blood bag with the adhesive sheet offers good handling ability and reduces a possibility of medical accidents.

### [Advantageous Effect of the Invention]

According to the adhesive sheet of the present invention to be used for adhesion to a plasticized vinyl chloride resin article, adhesion to the adherend is appropriately performed even if the heat-sealing temperature for the sheet and the adherend (plasticized vinyl chloride resin article) is a low temperature about 100°C or lower, and occurrence of the lifting or delamination of the adhesive sheet and the flowing out of the adhesive from an end portion of the adhesive sheet are unlikely to occur even if an autoclave treatment is performed for the above article to which the adhesive sheet is adhered.

Therefore, in the blood bag configured such that the adhesive sheet according to the present invention is adhered thereto, problems due to delamination of the adhesive sheet may not occur even if the heat-sealing is performed at a low temperature.

### [Best Mode for Carrying out the Invention]

Embodiments of the present invention will hereinafter be described.

### 1. Adhesive sheet

The adhesive sheet of the present embodiment to be used for adhesion to a plasticized vinyl chloride resin article (referred simply to as an "adhesive sheet", hereinafter) comprises a base material and a heat-sensitive adhesive layer laminated on one surface of the base material. A specific usage example of this adhesive sheet may preferably be a label which is to be adhered to a plasticized vinyl chloride resin article and to indicate information regarding the article (information regarding blood such as blood type if the above article is a blood bag).

The thickness of the adhesive sheet is not particularly limited, but may ordinarily be 50 µm or more and 300 µm or less. A thickness within such a range allows the adhesive sheet to be supplied, like common papers, to a sheet feeder of a printing means such as an ink-jet printer and a laser printer. Therefore, the handling ability of the adhesive sheet is high when the adhesive sheet is used as a label as described above.

### (1) Base material

The adhesive sheet according to the present embodiment includes a base material having a sheet-like shape. The term "sheet" as used herein includes a concept of a tape. That is, the two-dimensional shape of the base material is freely selected, and the base material may have a shape that can be used as a label without being punched (usually may be in a size of about several centimeters × 10 cm). In an alternative embodiment, the base material may have a rectangular shape having each side of about 1 m, for example, or may be an elongated tape that can be stored in a state of a roll. In the above cases, the adhesive sheet including such a base material may be punched to have a desired size, and each punched sheet can be used as a label.

A material that constitutes the base material is not particularly limited. The base material may be configured of a resin-based material such as film and synthetic paper, or may also be configured of a paper-based material.

Examples of a resin that constitutes a resin-based material include polyolefin resins such as polyethylene resin and polypropylene resin, polyester resins such as polybutylene terephthalate resin and polyethylene terephthalate resin, acetate resins, ABS resin, polystyrene resin, and vinyl chloride resin. Among them, one type of resin may be used to constitute the base material, or two or more types of resins may be used to constitute the base material.

The base material may comprise a single layer of a film that contains any of the above resin materials, or may also comprise multiple layers of films each of which contains any of the above resin materials. When the base material comprises a film or films, the film or films may be unstretched or stretched in a uniaxial direction or in biaxial directions, such as in a longitudinal direction and/or a lateral direction.

When the base material is configured of a paper-based material, specific examples thereof include paper base materials such as glassine paper, coated paper and wood-free paper, and laminated papers obtained by laminating thermoplastic resins such as polyethylene on the above paper base materials.

The adhesive sheet according to the present embodiment is to be subjected to a heat-sealing process and/or an autoclave treatment. In this regard, the base material may preferably be configured of a material or materials which can avoid severe deterioration even when such a process/treatment is performed. From this point of view, it is preferred that the base material is configured of polyolefin resin such as polypropylene or polyester resin such as polyethylene terephthalate.

The base material may be or may not be colored, or transparent. A surface of the base material may be subjected to printing, such as printing of characters. To this end, a surface of the base material opposite to the surface on which the heat-sensitive adhesive layer is formed (also referred to as a "printing surface", hereinafter) may be provided with a layer suitable for printing, such as a thermal recording layer, a printing reception layer that allows thermal transfer printing, ink-jet printing, laser printing or the like, a printing performance improving layer, and a layer to which ink can easily be adhered.

In addition, the surface of the base material on which the heat-sensitive adhesive layer is to be formed (also referred to as an "adhesive processing surface", hereinafter) may be subjected to some treatment, such as primer treatment and corona treatment, for the purpose of enhancing the interfacial adhesion strength (keying strength) with the heat-sensitive adhesive composition that constitutes the heat-sensitive adhesive layer.

The thickness of the base material may be, but is not limited to, ordinarily 10 µm or more and 250 µm or less, and preferably 25 µm or more and 200 µm or less.

The breaking strength of the base material is not particularly limited, but if the breaking strength is unduly low, the handling ability may considerably deteriorate. Therefore, the breaking strength of the base material may preferably be 10 N/15 mm or more, and more preferably 20 N/15 mm or more. The above values of the breaking strength are those measured according to JIS K7127. On the other hand, if the breaking strength of the base material is unduly high, then only the base material can easily be peeled off without being broken from the adhesive sheet which has been adhered to the plasticized vinyl chloride resin article. In this case, a possibility of occurrence of problems in security and hygienic management may be increased, such as that the adhesive sheet is intentionally replaced, for the plasticized vinyl chloride resin article to which the adhesive sheet has been attached. Therefore, the breaking strength of the base material may preferably be 220 N/15 mm or less, and more preferably 200 N/15 mm or less.

### (2) Heat-sensitive adhesive layer

The adhesive sheet according to the present embodiment includes a heat-sensitive adhesive layer provided at the side of the adhesive processing surface of the base material.

The heat-sensitive adhesive layer is formed using a heat-sensitive adhesive composition.

### (A) Heat-sensitive adhesive composition

The heat-sensitive adhesive composition that constitutes the heat-sensitive adhesive layer contains a polyester-based resin and a cross-linking agent.

### i) Polyester-based resin

The polyester-based resin is a polymer that has ester bonds, in a main chain, each formed by copolymerization of polyol and polyhydric carboxylic acid as monomers.

Specific examples of the above polyol include polyether polyols such as diethylene glycol, dipropylene glycol, triethylene glycol and polyethylene glycol, polyester polyols, ethylene glycol, propylene glycol, 1,4-butanediol, 1,3-pentanediol, neopentyl glycol, 1,6-hexanediol, cyclohexanediol, 2,2,4-trimethyl-1,3-pentanediol, glycerin, glycerin monoallyl ether, trimethylol ethane, trimethylol propane, and pentaerythritol. On the other hand, specific examples of the above polyhydric carboxylic acid include malonic acid, phthalic acid, terephthalic acid, isophthalic acid, tetrahydrophthalic acid, methyl tetrahydrophthalic acid, hexahydrophthalic acid, methyl hexahydrophthalic acid, succinic acid, glutaric acid, hexachloroendomethylene tetrahydrophthalic acid, endomethylene tetrahydrophthalic acid, endomethylene hexahydrophthalic acid, adipic acid, sebacic acid, azelaic acid, dimer acid, decadicarboxylic acid, cyclohexane dicarboxylic acid, trimellitic acid, pyromellitic acid, trimesic acid, and cyclopentane dicarboxylic acid. Combination of one or more polyols and one or more polyhydric carboxylic acids may appropriately be selected so that the polymer (polyester-based resin) to be obtained has properties as described later.

The polyester-based resin included in the heat-sensitive adhesive composition according to the present embodiment contains an amorphous polyester resin having a glass transition temperature of -30°C or higher and 7°C or lower. The heat-sensitive adhesive composition contains the amorphous polyester resin thereby to result in an effect that the adhesive sheet comprising the heat-sensitive adhesive layer formed using the heat-sensitive adhesive composition can adhere excellently to the adherend even when the heat-sealing temperature is a low temperature (about 100°C or lower). The glass transition temperature can be measured using a differential scanning calorimeter. A resin being "amorphous" in the present embodiment means that the resin is a thermoplastic polyester resin that has significantly low crystallinity or slow crystallization speed to such an extent that almost all the resin is not crystallized under an ordinary condition of a resin forming step. Commercially available products of the amorphous polyester resin having a glass transition temperature of -30°C or higher and 7°C or lower include amorphous (solvent-soluble) type of "POLYESTER" series (e.g., "LP-011" and "LP-022") available from The Nippon Synthetic Chemical Industry Co., Ltd.

If the glass transition temperature of the amorphous polyester resin contained in the polyester-based resin is lower than -30°C, the heat-sensitive adhesive layer will be unduly soft. In this case, the possibility of occurrence of the adhesive protruding from an end portion of the adhesive sheet may be high when the heat-sealing process and/or the autoclave treatment are performed. On the other hand, if the glass transition temperature exceeds 7°C, adhesion failure of the heat-sensitive adhesive layer to the adherend will easily occur in the heat-sealing process. In this case, the possibility of occurrence of the lifting or delamination of the adhesive sheet may be high. In view of more stably suppressing the above flowing out of the adhesive, the glass transition temperature of the amorphous polyester resin may preferably be -20°C or higher, and more preferably -15°C or higher. Also in view of more stably suppressing the occurrence of the above lifting or delamination of the adhesive sheet, the glass transition temperature of the amorphous polyester resin may preferably be 5°C or lower, and more preferably 0°C or lower.

The content of the amorphous polyester resin having the above glass transition temperature may have to be 80 mass% or more relative to the whole polyester-based resin. If the content is less than 80 mass%, it may be difficult to stably obtain the above effect based on containing the amorphous polyester resin (suppression of the flowing out of the adhesive and the lifting or delamination of the adhesive sheet). In view of more stably obtaining the above effect, the content of the amorphous polyester resin may preferably be 85 mass% or more, and more preferably 90 mass% or more. It may be most preferable that substantially the total amount of the polyester-based resin is formed of the above amorphous polyester resin.

As other polyester-based resins than the above amorphous polyester resin that are contained in the heat-sensitive adhesive composition according to the present embodiment, there may be exemplified an amorphous polyester resin that have a glass transition temperature out of the above range (-30°C or higher and 7°C or lower) and a crystalline polyester resin. The heat-sensitive adhesive composition may contain such resins thereby to allow the physical properties of the heat-sensitive adhesive layer to be adjusted. Among them, if an amorphous polyester resin having a high glass transition temperature, specifically 10°C or higher, is contained, the possibility of occurrence of the lifting or delamination of the adhesive sheet may be high when the heat-sealing temperature in the heat-sealing process is a low temperature (e.g., about 100°C or lower). Therefore, the content of such an amorphous polyester resin having a high glass transition temperature may preferably be 20 mass% or less relative to the whole polyester-based resin. It is more preferable that such an amorphous polyester resin having a high glass transition temperature is not contained. Meanwhile, the crystalline polyester resin degrades the heat-sealing ability at a low temperature. In addition, the productivity in this case may possibly be low because the amount of diluent tends to increase. The diluent may be necessary for preparing a coating liquid that contains the heat-sensitive adhesive composition when the heat-sensitive adhesive layer is formed using the heat-sensitive adhesive composition. Therefore, if the polyester-based resin contains the crystalline polyester resin, the content of the crystalline polyester resin may preferably be 20 mass% or less relative to the whole polyester-based resin. It is more preferable that the polyester-based resin does not contain the crystalline polyester resin. Commercially available products of the amorphous polyester resin having a glass transition temperature of 10°C or higher include amorphous (solvent-soluble) type of "POLYESTER" series (e.g., "LP-050") available from The Nippon Synthetic Chemical Industry Co., Ltd. Commercially available products of the crystalline polyester resin include crystalline (hot-melt) type of "POLYESTER" series (e.g., "SP-185") available from The Nippon Synthetic Chemical Industry Co., Ltd.

The hydroxyl value of the polyester-based resin may preferably be 1 mgKOH/g or more, and more preferably 2 mgKOH/g or more in view of enhancing the reactivity with a cross-linking agent to be described later and allowing the heat-sensitive adhesive layer to have a low level of pressure-sensitive adhesion ability (details will be described later) at a stage before the heat-sealing process. If the hydroxyl value of the polyester-based resin is unduly high, the heat-sensitive adhesive layer will excessively have the pressure-sensitive adhesion ability at a stage before the heat-sealing process, so that the workability may deteriorate. Therefore, this hydroxyl value may preferably be 50 mgKOH/g or less, more preferably 20 mgKOH/g or less, and most preferably 10 mgKOH/g or less.

The molecular weight (weight-average molecular weight) of the polyester-based resin is not particularly limited. In order for the heat-sensitive adhesive layer to appropriately have a low level of the pressure-sensitive adhesion ability (details will be described later) at a stage before the heat-sealing process, the molecular weight (weight-average molecular weight) of the polyester-based resin may preferably be 3, 000 or more and 100, 000 or less, and more preferably 5, 000 or more and 20,000 or less.

### ii) Cross-linking agent

The heat-sensitive adhesive composition according to the present embodiment contains a cross-linking agent that can react with the polyester-based resin to form a cross-linked structure.

Examples of such a cross-linking agent include polyisocyanate compounds, epoxy compounds, aluminum chelate compounds, and ethylene imine compounds. Among them, polyisocyanate compounds are preferable, and aliphatic or alicyclic polyisocyanate compounds are most preferable in view of the weatherability. Examples of the polyisocyanate compounds include polyisocyanate compounds that have two or more isocyanate groups per one molecule, for example, various polyisocyanate compounds such as diisocyanate compounds, triisocyanate compounds, tetraisocyanate compounds, pentaisocyanate compounds and hexaisocyanate compounds. Specific examples of the polyisocyanate compounds include aromatic polyisocyanates such as tolylene diisocyanate, xylylene diisocyanate, diphenylmethane diisocyanate, biphenyl diisocyanate, 3,3'-dimethyl-4,4'-biphenylene diisocyanate, methylene-bis(phenylisocyanate) and isophorone diisocyanate, and alicyclic polyisocyantes such as hydrogenated tolylene diisocyanate, hydrogenated xylylene diisocyanate and hydrogenated diphenylmethane diisocyanate, and aliphatic polyisocyanates such as 1,4-tetramethylene diisocyanate, hexamethylene diisocyanate and 2,2,4-trimethylhexamethylene diisocyanate. Among them, triisocyanate compounds may be preferable in view of suppressing the flowing out of the adhesive.

The content of the cross-linking agent in the heat-sensitive adhesive composition may preferably be 0.5 mass parts or more and 15 mass parts or less relative to 100 mass parts of the polyester-based resin. If water permeates into the heat-sensitive adhesive layer during the autoclave treatment, the interfacial adhesion strength of the heat-sensitive adhesive layer to the base material may be reduced so that delamination of the base material (referred to as "base material delamination", hereinafter) may occur. In view of suppressing the occurrence of the base material delamination, the content of the cross-linking agent may preferably be 1 mass part or more, and more preferably 3 mass parts or more, relative to 100 mass parts of the polyester-based resin. Occurrence of the base material delamination may lead to not only the lost of information on the label from the blood bag but also a risk that the delaminated base material is used to intentionally replace the adhesive sheet as described above. Meanwhile, in view of stably suppressing the occurrence of the lifting or delamination of the adhesive sheet when the heat-sealing process is performed at a low temperature, the content of the cross-linking agent may preferably be 10 mass part or less, and more preferably 6.5 mass parts or less, relative to 100 mass parts of the polyester-based resin.

To promote the reaction of the cross-linking agent and the polyester-based resin, the heat-sensitive adhesive composition according to the present embodiment may preferably contain a cross-linking promoter. Examples of the cross-linking promoter to be used include amino compounds such as triethylamine and tetramethylbutanediamine, and metal compounds such as stannous chloride, dimethyl tin dichloride, trimethyl tin hydroxide, di-n-butyl tin dilaurate, dibutyl tin diacetate, dibutyl tin sulfide, ferric chloride, ferric acetylacetate, cobalt naphthenate, bismuth nitrate, lead oleate, and amtimony trichloride.

### iii) Other components

The heat-sensitive adhesive composition according to the present embodiment may contain, in addition to the above components, coloring materials such as dyes and pigments, antioxidants such as anilide-based and phenol-based antioxidants, and ultraviolet absorbers such as benzophenone-based and benzotriazole-based ultraviolet absorbers, etc. The content of the other components may be freely selected so long as the effect achieved by the above polyester-based resin and cross-linking agent is not inhibited, but may preferably be 10 mass% or less relative to the whole compositions. It may be preferable that filler components such as talc, titanium dioxide, silica and starch are not contained because such filler components may reduce the interfacial adhesion strength between the base material and the heat-sensitive adhesive layer. Even if such filler components are to be contained, the content thereof may preferably be 15 mass parts or less relative to 100 mass parts of the polyester-based resin.

### (B) Structure and the like of heat-sensitive adhesive layer

The heat-sensitive adhesive layer formed using the above heat-sensitive adhesive composition has a cross-linked structure formed by reaction of the above polyester-based resin and cross-linking agent. Having this cross-linked structure may suppress the flowing out of the adhesive from the adhesive sheet. In addition, the base material delamination after the autoclave treatment may also be suppressed because the cross-linked structure avoids water from permeating into the heat-sensitive adhesive layer during the autoclave treatment.

The thickness of the heat-sensitive adhesive layer is not particularly limited. The thickness may ordinarily be within a range of 5 µm to 40 µm, and preferably within a range of 10 µm to 25 µm.

The heat-sensitive adhesive layer may preferably have a low level of pressure-sensitive adhesion ability at a stage before the heat-sealing process is performed. Having a low level of pressure-sensitive adhesion ability as used herein refers to that the adhesive strength in a state of the adhesive sheet to a plasticized vinyl chloride resin article is 0.1 N/25 mm or more and 2 N/25 mm or less as a peeling load when the adhesive sheet is peeled off using a 180° peeling method according to JIS Z-0237. If the heat-sensitive adhesive layer has a low level of the pressure-sensitive adhesion ability, the heat-sensitive adhesive layer can be temporarily fixed to a plasticized vinyl chloride resin article by contacting the adhesive sheet to the article. Therefore, the workability before the heat-sealing process may be improved. In view of stably obtaining this low level of the pressure-sensitive adhesion ability, it may be preferable to appropriately adjust the molecular weight (weight-average molecular weight) and/or the hydroxyl value of the polyester-based resin contained in the heat-sensitive adhesive composition as previously described.

A surface of the heat-sensitive adhesive layer may be subjected to printing, such as printing of characters. In this case, the base material may be formed transparent thereby to achieve an information indicating function required for a label.

### (C) Method for producing heat-sensitive adhesive layer

A method for producing the heat-sensitive adhesive layer may be freely selected. One example may be as follows.

Coating liquid is prepared which may be formed of the above heat-sensitive adhesive composition or which may be adjusted to have an appropriate viscosity as necessary by adding a diluent to the heat-sensitive adhesive composition and mixing them. Examples of the diluent include aromatic hydrocarbons such as benzene, toluene and xylene, aliphatic hydrocarbons such as hexane, heptane, octane, nonane and decane, and ketones such as methyl ethyl ketone, diethyl ketone and diisopropyl ketone. The compounding amount of the diluent may appropriately be selected so that a required viscosity can be obtained.

The adhesive processing surface of the base material is coated with this coating liquid; the diluent is removed by drying; the reaction is then progressed between the polyester-based resin in the heat-sensitive adhesive composition and the cross-linking agent; and a laminate is thus obtained such that a heat-sensitive adhesive layer having a cross-linked structure based on the above reaction is laminated on the base material.

The above drying may be a part or whole of a treatment for progressing the cross-linking reaction. When the adhesive sheet further comprises a release material as will be described below, the heat-sensitive adhesive layer may also be formed on a release surface of the release material using the above method.

### (3) Release material

The adhesive sheet may further include a release material. In this case, the release surface of the release material is applied to the surface of the adhesive sheet at the side of the heat-sensitive adhesive layer thereby to protect the heat-sensitive adhesive layer until when the adhesive sheet is adhered to a plasticized vinyl chloride resin article.

The release material may comprise a support base material of which at least one surface is formed as a release surface having releasability. This release surface may be the surface of a release agent layer provided on a surface, having no releasability, of the support base material, or a surface of the support base material which has releasability.

Examples of the support base material of the release material include papers, synthetic papers and resin-based films. Examples of the papers include glassine paper and polyethylene laminated paper. Examples of the resin-based films include films of polyolefin resins such as polyethylene resin and polypropylene resin, polyester resins such as polybutylene terephthalate resin and polyethylene terephthalate resin, acetate resins, polystyrene resin, and vinyl chloride resin. Examples of a release treatment agent that constitutes the release agent layer include silicone resin, alkyd resin, fluorine resin, and long-chain alkyl-containing resin. Examples of the support base material of which the surface or surfaces have releasability include polyolefin resin films such as polypropylene resin film and polyethylene resin film, and a film obtained by laminating any of these polyolefin resin films on a paper or on another film.

The thickness of the support base material of the release sheet may be, but is not limited to, ordinarily about 15 to 300 µm.

### 2. Method for producing adhesive sheet

A method for producing the adhesive sheet according to the present embodiment is freely selected.

When the adhesive sheet comprises the base material and the heat-sensitive adhesive layer, the previously described method may be used to obtain the adhesive sheet comprising the base material and the heat-sensitive adhesive layer.

When the adhesive sheet further comprises the release material, the release surface of the release material may be applied to the surface at the side of the heat-sensitive adhesive layer of the laminate, which is obtained through the above method and comprises the base material and the heat-sensitive adhesive layer, so that a laminate can be obtained in which the base material, the heat-sensitive adhesive layer and the release material are laminated in this order. In an alternative embodiment, the release surface of the release material is coated with the previously described coating liquid to form a laminate in which the heat-sensitive adhesive layer is provided on the release surface of the release material; the adhesive processing surface of the base material is applied to the surface of the laminate at the side of the heat-sensitive adhesive layer; and the adhesive sheet can thus be obtained.

### 3. Blood bag with adhesive sheet

The adhesive sheet according to the present embodiment can be used in various uses such that the heat-sensitive adhesive layer is adhered, but may particularly be effective when the adherend is a plasticized vinyl chloride resin article, in particular when the adhesive sheet is utilized as an indication label or a management label for a blood bag, because the lifting or delamination of the adhesive sheet may not occur even if a sterilization treatment is performed after the adhesive sheet is adhered to a plasticized vinyl chloride resin blood bag.

The adhesive sheet according to the present embodiment may effectively function in particular if the surface of an adherend (referred hereinafter to as an "adherend surface") to which the adhesive sheet is to adhere is rough. The adherend may be a plasticized vinyl chloride resin article. The surface roughness of this adherend may preferably be 1 µm or more, and more preferably 1.5 µm or more. The upper limit of the surface roughness of the adherend may be, but is not limited to, preferably 20 µm or less, and more preferably 10 µm or less.

The adhesive sheet for being adhered to a blood bag may be such that information regarding blood, such as blood type and date and hour of blood sampling, is preliminarily printed on the surface of the film base material. Adhesion of the adhesive sheet to a blood bag is ordinarily performed before the blood bag is filled with blood.

A method for producing a blood bag to which the adhesive sheet is adhered, i.e., a blood bag with the adhesive sheet, is not particularly limited. One example thereof may be as follows. The adhesive sheet according to the present embodiment is contacted with the adherend surface of a plasticized vinyl chloride resin blood bag, and the heat-sealing process is performed for the adhesive sheet in a state of contact with the blood bag. The adhesive sheet according to the present embodiment has good heat-sealing ability even when the heating temperature in this heat-sealing is a relatively low temperature. Accordingly, the heating temperature may preferably be 80°C or higher and 160°C or lower in ordinary cases, more preferably 90°C or higher and 150°C or lower, and most preferably 100°C or higher and 140°C or lower. The pressure for pressurizing may ordinarily be 0.1 MPa or more and 10 MPa or less, and more preferably 0.1 MPa or more and 1 MPa or less. The pressurizing time may preferably be 0.1 seconds or more and 5 seconds or less, and more preferably 0.5 seconds or more and 3 seconds or less. When the heat-sensitive adhesive layer of the adhesive sheet has a low level of pressure-sensitive adhesion ability, the possibility may be low that the adhesive sheet drops off from the blood bag in the above state in which the adhesive sheet is in contact with the blood bag. In this case, the workability is good during from the contact of the adhesive sheet to the heat-sealing process, which may be preferable.

Subsequently, the autoclave treatment may be performed for the blood bag to which the adhesive sheet is adhered through the heat-sealing process so that the blood bag is sterilized, and the blood bag with the adhesive sheet can thus be produced. Details of the autoclave treatment are not particularly limited. The environment may be enough if in a pressurized atmosphere at a temperature higher than 100°C. For example, the environment may be in an atmosphere of about 120°C and about 1.2 atm. The treatment time in such an atmosphere is not particularly limited. The treatment time may ordinarily be 10 minutes or more and 1 hour or less, and in many cases 20 minutes or more and 40 minutes or less in view of satisfying both the productivity and the degree of sterilization.

It is to be noted that the embodiments as heretofore explained are described to facilitate understanding of the present invention and are not described to limit the present invention. Therefore, it is intended that the elements disclosed in the above embodiments include all design changes and equivalents to fall within the technical scope of the present invention.

### [Examples]

Hereinafter, the present invention will be further specifically described with reference to examples, etc, but the scope of the present invention is not limited to these examples, etc.

### «Example 1»

Coating liquid was obtained by mixing 100 mass parts (solid content) of a polyester-based resin formed of an amorphous polyester resin (POLYESTER LP-011 available from The Nippon Synthetic Chemical Industry Co., Ltd.) having a glass transition temperature of 4°C; 4 mass parts (solid content) of a polyfunctional aromatic isocyanate (BHS-8515 available from TOYO INK CO., LTD.) as the cross-linking agent; and 100 mass parts of toluene as the diluent. The base material was prepared as a polypropylene-based synthesized paper film (YUPO SGP80, thickness of 80 µm, available from YUPO CORPORATION) having one surface (printing surface) provided with a layer to which ink can easily be adhered. The above coating liquid was applied to a surface (adhesive processing surface) of the base material opposite to the surface provided with the above layer to which ink can easily be adhered. Thereafter, the base material provided with the layer comprising the coating liquid was dried at 70°C for 2 minutes, and a laminate comprising the heat-sensitive adhesive layer of a thickness of 20 µm and the base material was thus obtained. The release material was prepared as a polyethylene terephthalate film (SP-PET38CL, thickness of 38 µm, available from LINTEC Corporation) provided with a silicone resin layer as the release agent layer. The release surface of the release material was applied to the surface at the side of the heat-sensitive adhesive layer in that laminate, and an adhesive sheet was thus obtained with the base material, the heat-sensitive adhesive layer and the release material being laminated in this order.

Information regarding blood was printed on the surface of the obtained adhesive sheet at the side of the base material (printing surface of the base material). The adhesive sheet with the printed information was then cut into a size of a label, and the release material was removed. The surface of the adhesive sheet at the side of the heat-sensitive adhesive layer, from which the release material was removed, was then contacted with the adherend surface (center line surface roughness Ra: 6.3 µm) as a surface of a plasticized vinyl chloride resin blood bag to which the adhesive sheet was to be adhered. Heat-sealing process (heat-sealing temperature of 80°C and 130°C, pressure of 0.31 MPa, and pressurizing time of 2 seconds) was performed for the adhesive sheet in a state of contact with the plasticized vinyl chloride resin blood bag using a heat-sealing machine (Heat Seal Tester TP-701 available from TESTER SANGYO CO, .LTD). Further, 30 minutes later from the completion of the heat-sealing process, autoclave treatment (121°C, 1.2 atm, and 30 minutes) was performed for the blood bag, to which the adhesive sheet was adhered through the heat-sealing process, using a high-pressure sterilization machine (Automatic High-pressure Sterilization Machine HA-24 type available from HIRAYAMA MANUFACTURING CORPORATION), and the blood bag with the adhesive sheet was thus obtained.

### «Example 2»

An adhesive sheet was obtained like in Example 1 except for changing the content of the cross-linking agent in the coating liquid from 4 mass parts (solid content) to 1.5 mass parts (solid content); this adhesive sheet was contacted with a blood bag like in Example 1; the heat-sealing process and the autoclave treatment were then performed; and the blood bag with the adhesive sheet was thus obtained.

### «Example 3»

An adhesive sheet was obtained like in Example 1 except for changing the content of the cross-linking agent in the coating liquid from 4 mass parts (solid content) to 6 mass parts (solid content) ; this adhesive sheet was contacted with a blood bag like in Example 1; the heat-sealing process and the autoclave treatment were then performed; and the blood bag with the adhesive sheet was thus obtained.

### «Example 4»

An adhesive sheet was obtained like in Example 1 except for changing the type of the amorphous polyester resin in the coating liquid to an amorphous polyester resin (POLYESTER LP-022 available from The Nippon Synthetic Chemical Industry Co., Ltd.) having a glass transition temperature of -15°C; this adhesive sheet was contacted with a blood bag like in Example 1; the heat-sealing process and the autoclave treatment were then performed; and the blood bag with the adhesive sheet was thus obtained.

### «Example 5»

An adhesive sheet was obtained like in Example 4 except for adding 10 mass parts of talc per 100 mass parts of the polyester-based resin in the coating liquid; this adhesive sheet was contacted with a blood bag like in Example 4; the heat-sealing process and the autoclave treatment were then performed; and the blood bag with the adhesive sheet was thus obtained.

### «Example 6»

An adhesive sheet was obtained like in Example 4 except for changing the content of the cross-linking agent in the coating liquid from 4 mass parts (solid content) to 6 mass parts (solid content) ; this adhesive sheet was contacted with a blood bag like in Example 4; the heat-sealing process and the autoclave treatment were then performed; and the blood bag with the adhesive sheet was thus obtained.

### «Example 7»

An adhesive sheet was obtained like in Example 1 except for adding 15 mass parts of an amorphous polyester resin (POLYESTER LP-050 available from The Nippon Synthetic Chemical Industry Co., Ltd.) having a glass transition temperature of 10°C per 100 mass parts of the amorphous polyester resin having a glass transition temperature of 4°C in the coating liquid; this adhesive sheet was contacted with a blood bag like in Example 1; the heat-sealing process and the autoclave treatment were then performed; and the blood bag with the adhesive sheet was thus obtained.

### «Example 8»

An adhesive sheet was obtained like in Example 1 except for adding 15 mass parts of a crystalline polyester resin (POLYESTER SP-185 available from The Nippon Synthetic Chemical Industry Co., Ltd.) having a glass transition temperature of -2°C per 100 mass parts of the amorphous polyester resin having a glass transition temperature of 4°C in the coating liquid; this adhesive sheet was contacted with a blood bag like in Example 1; the heat-sealing process and the autoclave treatment were then performed; and the blood bag with the adhesive sheet was thus obtained.

### «Comparative Example 1»

An adhesive sheet was obtained like in Example 1 except for not containing a cross-linking agent in the coating liquid; this adhesive sheet was contacted with a blood bag like in Example 1; the heat-sealing process and the autoclave treatment were then performed; and the blood bag with the adhesive sheet was thus obtained.

### «Comparative Example 2»

An adhesive sheet was obtained like in Example 1 except for changing the polyester-based resin in the coating liquid to a crystalline polyester resin (POLYESTER SP-185 available from The Nippon Synthetic Chemical Industry Co., Ltd.) having a glass transition temperature of -2°C; this adhesive sheet was contacted with a blood bag like in Example 1; the heat-sealing process and the autoclave treatment were then performed; and the blood bag with the adhesive sheet was thus obtained.

### «Comparative Example 3»

An adhesive sheet was obtained like in Example 1 except for changing the type of the amorphous polyester resin in the coating liquid to an amorphous polyester resin (POLYESTER LP-050 available from The Nippon Synthetic Chemical Industry Co., Ltd.) having a glass transition temperature of 10°C; this adhesive sheet was contacted with a blood bag like in Example 1; the heat-sealing process and the autoclave treatment were then performed; and the blood bag with the adhesive sheet was thus obtained.

### «Comparative Example 4»

An adhesive sheet was obtained like in Example 1 except for adding 30 mass parts of an amorphous polyester resin (POLYESTER LP-050 available from The Nippon Synthetic Chemical Industry Co., Ltd.) having a glass transition temperature of 10°C per 100 mass parts of the amorphous polyester resin having a glass transition temperature of 4°C in the coating liquid; this adhesive sheet was contacted with a blood bag like in Example 1; the heat-sealing process and the autoclave treatment were then performed; and the blood bag with the adhesive sheet was thus obtained.

### «Comparative Example 5»

An adhesive sheet was obtained like in Example 1 except for adding 30 mass parts of a crystalline polyester resin (POLYESTER SP-185 available from The Nippon Synthetic Chemical Industry Co., Ltd.) having a glass transition temperature of -2°C per 100 mass parts of the amorphous polyester resin having a glass transition temperature of 4°C in the coating liquid; this adhesive sheet was contacted with a blood bag like in Example 1; the heat-sealing process and the autoclave treatment were then performed; and the blood bag with the adhesive sheet was thus obtained.

### «Exemplary Test 1» <Evaluation of occurrence of lifting or delamination>

Visual observation was performed for the adhesive sheet of the blood bag with the adhesive sheet at a stage after the heat-sealing process and at a stage after the autoclave treatment in each of the examples and the comparative examples to evaluate the occurrence of the lifting or delamination of the adhesive sheet in terms of the following criteria. Results of the evaluation are listed in Table 1.
A: No lifting or delamination of the adhesive sheet was observed.
B: No delamination of the adhesive sheet was observed, but a part of insufficient adhesion (lifting) was partially recognized.
C: Delamination of the adhesive sheet was observed.

### «Exemplary Test 2» <Evaluation of delamination state after peel test>

A blood bag with an adhesive sheet in a state after the heat-sealing process was separately prepared in each of the examples and the comparative examples, and the adhesive sheet was peeled off at a peeling speed of 300 mm/min using a 180° peeling method.

In addition, for the blood bag with the adhesive sheet after the autoclave treatment in each of the examples and the comparative examples, the adhesive sheet was peeled off using a method similar to the above method.

The delamination state after the peeling off was visually observed, and evaluation was performed in terms of the following criteria. Results of the evaluation are listed in Table 1.
A: The base material of the adhesive sheet was broken.
B: The base material of the adhesive sheet was delaminated at an interface with the heat-sensitive adhesive layer.
C: Delamination occurred at an interface between the adhesive sheet and the blood bag, or evaluation was not possible because the adhesive sheet dropped off from the blood bag.

### «Exemplary Test 3» <Evaluation of flowing out of adhesive>

Visual observation was performed for the adhesive sheet of the blood bag with the adhesive sheet at a stage after the heat-sealing process (in a case of a heat-sealing temperature of 130°C) and at a stage after the autoclave treatment in each of the examples and the comparative examples to evaluate whether or not the adhesive flowed out from an end portion of the adhesive sheet and whether or not the adhesive protruded from an end portion of the adhesive sheet in terms of the following criteria. Results of the evaluation are listed in Table 1.
A: Flowing out and protrusion were not observed.
B: Flowing out was not observed, but protrusion was observed.
C: Flowing out was observed.

**[Table 1]**

| | Heat-sealing temperature: 80°C | | | | | Heat-sealing 130°C | | | | | |
|---|---|---|---|---|---|---|---|---|---|---|---|
| | After heat-sealing | | After autoclave | | | After heat-sealing | | | After autoclave | | |
| | Lifting or delamination | Delamination state | Lifting or delamination | Delamination state | Flowing out | Lifting or Delamination | Delamination state | Flowing out | Lifting or Delamination | Delamination state | Flowing out |
| Example 1 | A | A | A | A | A | A | A | A | A | A | A |
| Example 2 | A | A | A | A | B | A | A | A | A | A | B |
| Example 3 | A | A | A | A | A | A | A | A | A | A | A |
| Example 4 | A | A | A | A | A | A | A | A | A | A | A |
| Example 5 | B | A | B | A | A | A | A | A | B | A | A |
| Example 6 | A | A | A | A | A | A | A | A | A | A | A |
| Example 7 | B | A | A | A | A | A | A | A | A | A | A |
| Example 8 | B | A | B | B | A | B | A | A | B | A | A |
| Comparative Example 1 | A | A | C | B | C | C | B | C | C | B | C |
| Comparative Example 2 | C | C | C | C | C | C | B | A | C | B | A |
| Comparative Example 3 | C | C | C | C | C | A | A | A | A | A | A |
| Comparative Example 4 | C | C | C | C | C | A | A | A | A | A | A |
| Comparative Example 5 | C | C | C | C | C | C | B | A | B | A | A |

As shown in Table 1, in the adhesive sheets of the examples satisfying the conditions of the present invention, the lifting or delamination of the adhesive sheet did not occur even when the heat-sealing temperature was 80°C, and the adhesive sheet was appropriately adhered to the adherend even after the autoclave treatment regardless of the heat-sealing temperature. Moreover, the flowing out of the adhesive was not recognized even through the autoclave treatment was performed after the heat-sealing at 130°C.

### [Industrial Applicability]

The adhesive sheet of the present invention can be suitably used as an information label or an indication label for a blood bag, because the flowing out of the adhesive is suppressed even when the heat-sealing process and/or the autoclave treatment are performed, and the lifting or delamination of the adhesive sheet is unlikely to occur even when the heat-sealing temperature in the heat-sealing process is a low temperature.

## Claims

1. An adhesive sheet to be used for adhesion to a plasticized vinyl chloride resin article, the adhesive sheet comprising a base material and a heat-sensitive adhesive layer laminated on one surface of the base material, the base material having a sheet-like shape, wherein:
the heat-sensitive adhesive layer is formed using a heat-sensitive adhesive composition;
the heat-sensitive adhesive composition contains a polyester-based resin and a cross-linking agent;
the polyester-based resin contains an amorphous polyester resin having a glass transition temperature of -30°C or higher and 7°C or lower in an amount of 80 mass% or more relative to the whole polyester-based resin; and
the heat-sensitive adhesive layer includes a cross-linked structure formed by reaction of the polyester-based resin and the cross-linking agent.

2. The adhesive sheet as recited in claim 1, wherein the cross-linking agent is an isocyanate-based cross-linking agent.

3. The adhesive sheet as recited in claim 1 or 2, wherein the polyester-based resin consists only of the amorphous polyester resin having a glass transition temperature of -30°C or higher and 7°C or lower.

4. The adhesive sheet as recited in any one of claims 1 to 3, wherein the adhesive sheet is such that a heat-sealing process is performed for the adhesive sheet in a state in which the adhesive sheet is in contact with an adherend surface of the plasticized vinyl chloride resin article, the adherend surface being a surface to which the adhesive sheet is to be adhered, and an autoclave treatment is performed for the plasticized vinyl chloride resin article to which the adhesive sheet is adhered through the heat-sealing process.

5. The adhesive sheet as recited in any one of claims 1 to 4, wherein the plasticized vinyl chloride resin article is a plasticized vinyl chloride resin blood bag.

6. A production method for a blood bag with an adhesive sheet, comprising:
contacting the adhesive sheet as recited in any one of claims 1 to 5 with an adherend surface of a plasticized vinyl chloride resin blood bag, the adherend surface being a surface to which the adhesive sheet is to be adhered;
performing a heat-sealing process for the adhesive sheet in a state in which the adhesive sheet is in contact with the blood bag; and
performing an autoclave treatment for the blood bag to which the adhesive sheet is adhered through the heat-sealing process to sterilize the blood bag.

7. A blood bag with an adhesive sheet obtained through a production method, the production method comprising:
contacting the adhesive sheet as recited in any one of claims 1 to 5 with an adherend surface of a plasticized vinyl chloride resin blood bag, the adherend surface being a surface to which an adhesive sheet is to be adhered;
performing a heat-sealing process for the adhesive sheet in a state in which the adhesive sheet is in contact with the blood bag; and
performing an autoclave treatment for the blood bag to which the adhesive sheet is adhered through the heat-sealing process to sterilize the blood bag.
